# EUROPÄISCHE PATENTANMELDUNG

(11) **EP 2 546 736 A1**
(43) Veröffentlichungstag der Anmeldung: **16.01.2013**
(21) Anmeldenummer: 12007001.6
(22) Anmeldetag: 30.11.2007
(51) Int. Cl.: G06F 3/147, H04N 1/00

(54) **Verfahren zur Übertragung von digitalen Daten an einen digitalen Bilderrahmen**

(30) Priorität: 01.12.2006 EP 06024938
(62) Teilanmeldung aus: 07846918.6
(71) Anmelder: Vodafone Holding GmbH, 40213 Düsseldorf (DE)
(72) Erfinder: Holzberg, Jan Michael, 40213 Düsseldorf (DE); Altareva, Evgeniya, 40237 Düsseldorf (DE)
(74) Vertreter: Ring & Weisbrodt

(57) **Zusammenfassung**

Die vorliegende Erfindung betrifft ein Verfahren zur Übertragung von digitalen Bilddaten und/oder digitalen Daten akustischer Signale in einem Mobilfunknetz (14), insbesondere gemäß einem GSM-, GPRS- und/oder UMTS-Funknetzstandard, über wenigstens einen Kommunikationsdienst des Mobilfunknetzes an eine in dem Mobilfunknetz (14) betreibbare Empfangseinheit eines digitalen Bilderrahmens (1), wobei der digitale Bilderrahmen (1) eine Anzeigeeinheit (2) zur Wiedergabe von digitalen Bilddaten und/oder digitalen Daten akustischer Signale, vorzugsweise umfassend Text-, Standbild-, Bewegtbild- und/oder Videodaten, wenigstens eine Speichereinheit zum Speichern von digitalen Bilddaten und/oder digitalen Daten akustischer Signale, einer Steuer- und Kontrolleinheit zur Steuerung der Wiedergabe von digitalen Bilddaten und/oder digitalen Daten akustischer Signale aus der wenigstens einen Speichereinheit seitens der Anzeigeeinheit (2), eine Steuereingabeeinheit (4, 5, 6, 7, 8, 9, 10, 12) zur Erfassung von Eingaben zur Steuerung von Funktionen der Steuer- und Kontrolleinheit, und eine in dem Mobilfunknetz (14), insbesondere gemäß einem GSM-, GPRS- und/oder UMTS-Funknetzstandard, betreibbare Empfangseinheit zum Empfangen von digitalen Bilddaten über wenigstens einen Kommunikationsdienst des Mobilfunknetzes (14) aufweist, wobei der Zeitpunkt einer über wenigstens einen Kommunikationsdienst des Mobilfunknetzes erfolgenden Übertragung von digitalen Bilddaten und/oder digitalen Daten akustischer Signale hinsichtlich Datum und/oder Uhrzeit einstellbar ist.

## Beschreibung

Die vorliegende Erfindung betrifft einen digitalen Bilderrahmen mit einer Anzeigeeinheit zur Wiedergabe von digitalen Bilddaten, wenigstens einer Speichereinheit zum Speichern von digitalen Bilddaten, einer Steuer- und Kontrolleinheit zur Steuerung der Wiedergabe von digitalen Bilddaten aus der wenigstens einen Speichereinheit seitens der Anzeigeeinheit und einer Steuereingabeeinheit zur Erfassung von Eingaben zur Steuerung von Funktionen der Steuer- und Kontrolleinheit. Ein derartiger digitaler Bilderrahmen ist beispielsweise aus der GB 2 406 991 A beziehungsweise der DE 203 15 146 U1 bekannt.

Gegenstand der vorliegenden Erfindung ist ferner ein Verfahren zur Übertragung von digitalen Bilddaten und/oder digitalen Daten akustischer Signale in einem Mobilfunknetz, insbesondere einem Mobilfunknetz gemäß einem GSM-, GPRS-und/oder UMTS-Funknetzstandard, über wenigstens einen Kommunikationsdienst des Mobilfunknetzes an eine in dem Mobilfunknetz betreibbare Empfangseinheit.

Im Stand der Technik sind zahlreiche Ausgestaltungen zur Wiedergabe von digitalen Bilddaten, insbesondere sogenannten digitalen Fotografien, bekannt, insbesondere aus der oben bereits genannten GB 2 406 991 A beziehungsweise DE 203 15 146 U1.

Nachteilig bei den bisher bekannten digitalen Bilderrahmen ist der mit dem Einbeziehungsweise Aufspielen als auch der Wiedergabe von digitalen Bilddaten verbundene Arbeits- und/oder Bedienaufwand, der insbesondere ältere und/oder ungeübte Personen von einer Nutzung entsprechender digitaler Bilderrahmen abhält. Bisher müssen zum Auf- beziehungsweise Einspielen von digitalen Bilddaten in beziehungsweise auf entsprechende digitale Bilderrahmen entweder austauschbare Speichermittel ausgetauscht oder solche zumindest zum Auf- beziehungsweise Einspielen mit dem digitalen Bilderrahmen verbunden werden.

Der Erfindung liegt in Anbetracht dieses Standes der Technik die Aufgabe zugrunde, unter Meidung der beschriebenen Nachteile einen insbesondere hinsichtlich Handhabung und/oder Bedienung verbesserten digitalen Bilderrahmen bereitzustellen. Dabei soll insbesondere das Ein- beziehungsweise Aufspielen von digitalen Bilddaten in beziehungsweise auf den Bilderrahmen vereinfacht werden.

Zur technischen Lösung wird ein digitaler Bilderrahmen mit einer Anzeigeeinheit zur Wiedergabe von digitalen Bilddaten, wenigstens einer Speichereinheit zum Speichern von digitalen Bilddaten, einer Steuer- und Kontrolleinheit zur Steuerung der Wiedergabe von digitalen Bilddaten aus der wenigstens einen Speichereinheit seitens der Anzeigeeinheit und einer Steuereingabeeinheit zur Erfassung von Eingaben zur Steuerung von Funktionen der Steuer- und Kontrolleinheit vorgeschlagen, welcher gekennzeichnet ist durch eine in einem Mobilfunknetz, insbesondere gemäß einem GSM-, GPRS- und/oder UMTS-Funknetzstandard, betreibbare Empfangseinheit zum Empfangen von digitalen Bilddaten über wenigstens einen Kommunikationsdienst des Mobilfunknetzes.

Der Erfindung liegt die Erkenntnis zugrunde, dass durch eine erfindungsgemäße Verwendung einer in einem Mobilfunknetz betreibbaren Empfangseinheit zum Empfangen von digitalen Bilddaten über wenigstens einen Kommunikationsdienst des Mobilfunknetzes die Handhabung und/oder Bedienung insbesondere hinsichtlich des Ein- beziehungsweise Aufspielens von digitalen Bilddaten in beziehungsweise auf den Bilderrahmen vereinfacht und vorzugsweise zumindest teilautomatisch dezentral über das Mobilfunknetz erfolgen kann.

Eine weitere Ausgestaltung der Erfindung ist gekennzeichnet durch ein von der Empfangseinheit genutztes Mobilfunkteilnehmeridentifikationsmodul, einem sogenannten SIM (SIM: Subscriber Identity Modul).

Eine weitere Ausgestaltung der Erfindung ist gekennzeichnet durch eine Speicherung von mittels der Empfangseinheit empfangender digitaler Bilddaten seitens der Speichereinheit. Die Speicherung erfolgt vorteilhafterweise gesteuert durch die Steuer- und Kontrolleinheit. Eine weitere vorteilhafte Ausgestaltung der Erfindung ist gekennzeichnet durch eine automatische Speicherung bei Empfang von digitalen Bilddaten. Seitens des digitalen Bilderrahmens, vorteilhafterweise seitens der Steuer- und Kontrolleinheit des digitalen Bilderrahmens ist dazu vorteilhafterweise eine Einheit vorgesehen, welche anhand empfangener digitaler Daten erkennen kann, ob es sich um digitale Bilddaten handelt, vorzugsweise um digitale Bilddaten eines üblichen Datenformats für digitale Bilddaten, beispielsweise gemäß dem JPG- oder TIFF-Format oder dergleichen Bilddatenformate.

Vorteilhafterweise umfassen die digitalen Bilddaten Text-, Standbild-, Bewegbild- und/oder Videodaten.

Eine besonders vorteilhafte Ausgestaltung der Erfindung ist gekennzeichnet durch digitale Bilddaten gemäß wenigstens einem Format eines Standards des Kommunikationsdienstes des Mobilfunknetzes. Besonders bevorzugt werden als Kommunikationsdienste des Mobilfunknetzes Dienste wie SMS (SMS: Short Message Service) und/oder MMS (MMS: Multimedia Message Service) eingesetzt.

Vorteilhafterweise ist die wenigstens eine Speichereinheit des digitalen Bilderrahmens ausgebildet bis zu 30 digitale Bilder zu speichern. Bei Bedarf und nach Ausgestaltung der Speichereinheit beziehungsweise der Größe der Speichereinheit kann diese vorteilhafterweise mehr als 30 digitale Bilder speichern. Durch die Begrenzung der Speicherkapazität der Speichereinheit auf vorzugsweise bis zu 30 digitale Bilder ist der digitale Bilderrahmen insgesamt kostengünstig und als Massenware in großen Stückzahlen fertigbar.

Eine weitere besonders vorteilhafte Ausgestaltung der Erfindung ist dadurch gekennzeichnet, dass die Steuer- und Kontrolleinheit digitale Bilddaten in ein an die Wiedergabemöglichkeiten der Anzeigeeinheit angepasstes Format bringt. Vorteilhafterweise erfolgt die Verbringung der digitalen Bilddaten in das an die Wiedergabemöglichkeiten der Anzeigeeinheit angepasste Format im Rahmen der Steuerung der Wiedergabe von digitalen Bilddaten aus der wenigstens einen Speichereinheit oder im Rahmen der Speicherung der digitalen Bilddaten seitens der Speichereinheit. Die Verbringung der digitalen Bilddaten erfolgt dabei vorzugsweise automatisch, so dass keine weiteren Bedien- oder Handhabungseingaben von einem Nutzer des digitalen Bilderrahmens vorgenommen werden müssen.

Eine vorteilhafte Ausgestaltung der Erfindung ist gekennzeichnet durch eine Anzeigeeinheit zur Wiedergabe von akustischen Signalen, wenigstens einer Speichereinheit zur Speicherung von digitalen Daten akustischer Signale, einer Steuer- und Kontrolleinheit zur Steuerung der Wiedergabe von akustischen Signalen aus der wenigstens einen Speichereinheit seitens der Anzeigeeinheit einer Steuereingabeeinheit zur Erfassung von Eingaben zur Steuerung von Funktionen der Steuer- und Kontrolleinheit und einer in einem Mobilfunknetz, insbesondere gemäß einem GSM-, GPRS- und/oder UMTS-Funknetzstandard, betreibbaren Empfangseinheit zum Empfangen von digitalen Daten akustischer Signale über wenigstens einen Kommunikationsdienst des Mobilfunknetzes.

Die Empfangseinheit zum Empfangen von digitalen Daten akustischer Signale nutzt vorteilhafterweise ein Mobilfunkteilnehmeridentifikationsmodul (SIM) für einen autorisierten Zugang zum Mobilfunknetz.

Eine weitere Ausgestaltung der Erfindung ist gekennzeichnet durch eine Speicherung von mittels der Empfangseinheit zum Empfangen von digitalen Daten akustischer Signale empfangender digitaler Daten akustischer Signale seitens der Speichereinheit. Eine weitere Ausgestaltung der Erfindung sieht eine von der Steuer- und Kontrolleinheit gesteuerte Speicherung vor. Vorteilhafterweise erfolgt eine automatische Speicherung bei Empfang von digitalen Daten akustischer Signale.

Eine besonders bevorzugte Ausgestaltung der Erfindung sieht vor, dass die wenigstens eine Speichereinheit zur Speicherung von digitalen Bilddaten und die wenigstens eine Speichereinheit zur Speicherung von digitalen Daten akustischer Signale eine Speichereinheit, die Steuer- und Kontrolleinheit zur Steuerung der Wiedergabe von digitalen Bilddaten und die Steuer- und Kontrolleinheit zur Steuerung der Wiedergabe von akustischen Signalen eine Steuer- und Kontrolleinheit, die Steuereingabeeinheit zur Erfassung von Eingaben zur Steuerung von Funktionen der Steuer- und Kontrolleinheit zur Steuerung der Wiedergabe von digitalen Bilddaten und die Steuereingabeeinheit zur Erfassung von Eingaben zur Steuerung von Funktionen der Steuer- und Kontrolleinheit zur Steuerung der Wiedergabe von akustischen Signalen eine Steuereingabeeinheit und die Empfangseinheit zum Empfangen von digitalen Bilddaten und die Empfangseinheit zum Empfangen von digitalen Daten akustischer Signale eine Empfangseinheit sind.

Eine weitere vorteilhafte Ausgestaltung der Erfindung ist gekennzeichnet durch einen gemeinsamen Empfang, einer gemeinsamen Speicherung und/oder einer gemeinsamen Wiedergabe digitaler Bilddaten und digitaler Daten akustischer Signale.

Vorteilhafterweise ist die wenigstens eine Speichereinheit austauschbar.

Zur technischen Lösung der eingangs genannten Aufgabe wird mit der vorliegenden Erfindung ferner ein Verfahren zur Übertragung von digitalen Bilddaten und/oder digitalen Daten akustischer Signale in einem Mobilfunknetz, insbesondere gemäß einem GSM-, GPRS- und/oder UMTS-Funknetzstandard, über wenigstens einen Kommunikationsdienst des Mobilfunknetzes an eine in dem Mobilfunknetz betreibbare Empfangseinheit, vorgeschlagen, welches dadurch gekennzeichnet ist, dass die Empfangseinheit eines erfindungsgemäßen digitalen Bilderahmens ist.

Erfindungsgemäß werden als Kommunikationsdienst des Mobilfunknetzes SMS und/oder MMS verwendet.

Gemäß einer weiteren vorteilhaften Ausgestaltung der Erfindung ist der Zeitpunkt der Übertragung von digitalen Bilddaten und/oder digitalen Daten akustischer Signale hinsichtlich Datum und/oder Uhrzeit einstellbar. Vorteilhafterweise ist die Einstellbarkeit über das Mobilfunknetz realisierbar. Vorteilhafterweise wird der Zeitpunkt der Übertragung von dem Sender der digitalen Bilddaten und/oder digitalen Daten akustischer Signale ausgewählt und/oder vorgegeben. So kann beispielsweise der Enkel seiner Oma pünktlich zu ihrem Geburtstag ein digitales Bild und einen akustischen Gruß auf den erfindungsgemäßen digitalen Bilderrahmen über das Mobilfunknetz senden lassen beziehungsweise selbst senden. Eine weitere vorteilhafte Ausgestaltung der Erfindung sieht vor, dass zu übertragende digitale Bilddaten und/oder digitale Daten akustischer Signale zumindest bis zum Zeitpunkt der Übertragung seitens einer Einrichtung des Mobilfunknetzes, vorzugsweise einer Datenbankeinrichtung des Mobilfunknetzes zwischengespeichert und von dieser dann an die Empfangseinheit übertragen werden.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:
- Fig. 1: in einer schematischen Darstellung ein Ausführungsbeispiel eines erfindungsgemäßen digitalen Bilderrahmens;
- Fig.2: in einer schematischen Prinzipdarstellung Ausführungsbeispiele für eine erfindungsgemäße Übertragung von digitalen Bilddaten und/oder digitalen Daten akustischer Signale an einen erfindungsgemäßen digitalen Bilderrahmen.

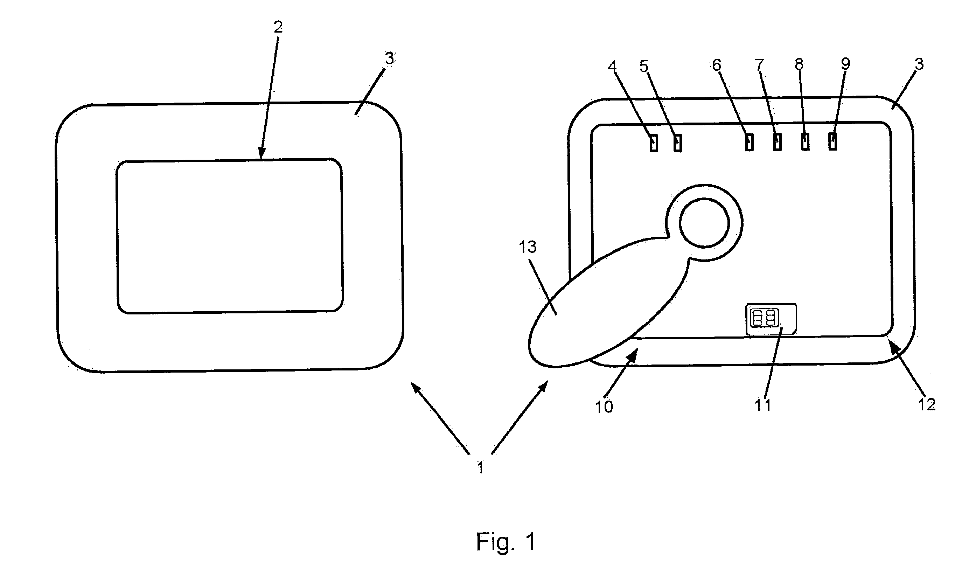

Fig. 1 zeigt einen erfindungsgemäßen digitalen Bilderrahmen 1 in einer Frontansicht (in Fig. 1 links dargestellt) und in einer Rückansicht (in Fig. 1 rechts dargestellt). Der digitale Bilderrahmen 1 weist in einem Gehäuse 3 eine Anzeigeeinheit 2 zur Wiedergabe von digitalen Bilddaten, eine Speichereinheit zum Speichern von digitalen Bilddaten (in Fig. 1 nicht explizit dargestellt), eine Steuer- und Kontrolleinheit zur Steuerung der Wiedergabe von digitalen Bilddaten aus der Speichereinheit seitens der Anzeigeeinheit 2, eine Steuereingabeeinheit (in Fig. 1 nicht explizit dargestellt), umfassend mehrere Tasten 4, 5, 6, 7, 8, 9, 12 und Anschlüsse 10 zur Erfassung von Eingaben zur Steuerung von Funktionen der Steuer- und Kontrolleinheit und eine in einem Mobilfunknetz 14 gemäß einem GSM-, GPRS- und/oder UMTS-Funknetzstandard betreibbare Empfangseinheit (in Fig. 1 nicht explizit dargestellt) zum Empfangen von digitalen Bilddaten über wenigstens einen Kommunikationsdienst des Mobilfunknetzes. Weiter weist das Gehäuse 3 des digitalen Bildrahmens 1 eine an der Rückseite des digitalen Bildrahmens verstellbar befestigte Stütze 13 auf, welcher ein Aufstellen des digitalen Bildrahmens 1 auf einem Untergrund, beispielsweise einem Tisch oder dergleichen, ermöglicht.

Die Anzeigeeinheit 2 des digitalen Bilderrahmens 1 weist vorliegend eine minimale Größe von 7 Zoll bei einer minimalen Auflösung gemäß dem sogenannten VGA Standard mit 640 x 480 Bildpunkten auf.

Die in dem Mobilfunknetz 14 betreibbare Empfangseinheit des digitalen Bilderrahmens nutzt für den Zugang zum Mobilfunknetz 14 vorliegend eine SIM 11 als Mobilfunkteilnehmeridentifikationsmodul. Die SIM 11 ist dabei von der Rückseite 11 des digitalen Bilderrahmens 1 her in die Empfangseinheit des digitalen Bilderrahmens einsetzbar.

Die Tasten 4, 5, 6, 7, 8, 9 und 12 sowie der Anschluss 10 des digitalen Bilderrahmens 1 weisen vorliegend folgende Funktionen auf:
- Taster 4:: Steuerung angezeigtes Bild, vorliegend Wechsel zum vorherigen Bild (Previous)
- Taster 5:: Steuerung nächstes Bild, vorliegend Wechsel zum vorherigen Bild (Next)
- Taster 6:: Löschen des angezeigten Bildes aus der Speichereinheit (Delete Picture)
- Schalter 7:: Ein- beziehungsweise Ausschalten der Anzeige von Textinformationen (Text On/Off)
- Schalter 8:: Sichern eines angezeigten Bildes (Lock Picture)
- Taster 9:: Erfassen eines Bildes aus einer Bewegtbildreihe (Freeze Slideshow)
- Taster 10:: Anschluss Stromversorgung (DC Power)
- Taster 12:: Ein-/Ausschalter (On/Off Button)

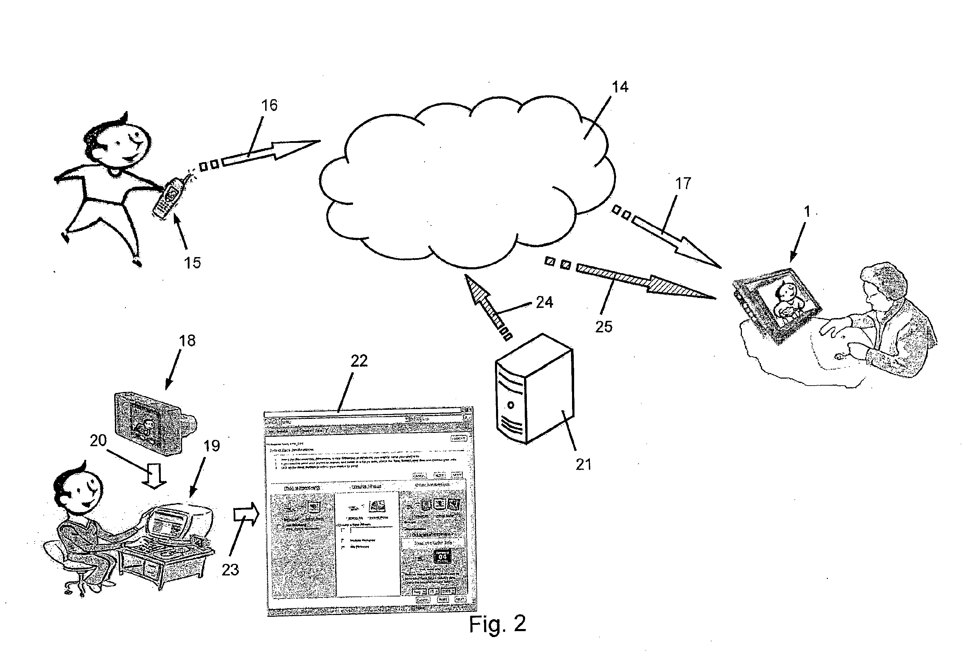

Fig. 2 zeigt zwei Anmeldungsmöglichkeiten zur Übertragung von digitalen Bilddaten auf einen digitalen Bilderrahmen 1 gemäß Fig. 1.

Zum einen kann der Nutzer eines eine digitale Kamera aufweisenden, in dem Mobilfunknetz 14 betreibbaren Mobilfunktelefons 15 ein spontan gemachtes Bild unter Nutzung eines Kommunikationsdienstes des Mobilfunknetzes 14 an den digitalen Bilderrahmen 1 übertragen. Dazu sendet der Nutzer des Mobilfunktelefons 15 entsprechende digitale Bilddaten unter Nutzung des Kommunikationsdienstes des Mobilfunknetzes 14 an das Mobilfunknetz 14. Die Übertragung der digitalen Bilddaten von dem Mobilfunktelefon 15 an das Mobilfunknetz 14 ist in Fig. 2 durch den mit dem Bezugszeichen 16 gekennzeichneten Pfeil symbolisch dargestellt. Dabei hat der Nutzer des Mobilfunktelefons 15 die der SIM 11 des digitalen Bilderrahmens 1 im Mobilfunknetz 14 zugeordnete Rufnummer (MSISDN) eingegeben. Seitens des Mobilfunknetzes werden die entsprechend empfangenden digitalen Bilddaten mit dem entsprechenden Kommunikationsdienst des Mobilfunknetzes 14 unter Nutzung der MSISDN der SIM 11 des digitalen Bilderrahmens 1 an diesen beziehungsweise dessen in dem Mobilfunknetz 14 betreibbare Empfangseinheit weitergeleitet beziehungsweise weiter geroutet. Die Übertragung von dem Mobilfunknetz 14 auf den digitalen Bilderrahmen 1 ist in Fig. 2 durch den mit dem Bezugszeichen 17 gekennzeichneten Pfeil symbolisch dargestellt.

Alternativ und/oder ergänzend kann die Übertragung von digitalen Bilddaten auf den digitalen Bilderrahmen 1 wie folgt erfolgen:

Es wird mit einer digitalen Kamera 18 ein Bild erstellt und dieses Bild auf einen Rechner 19 übertragen. Die Übertragung digitaler Bilddaten von der Kamera 18 auf den Rechner ist in Fig. 2 symbolisch durch den mit dem Bezugszeichen 20 gekennzeichneten Pfeil dargestellt. Seitens des Rechners 19 vorliegende digitale Bilddaten, insbesondere die mit der Kamera 18 aufgenommenen digitalen Bilddaten aber auch andere seitens des Rechners 19 bereitgehaltene digitale Bilddaten können dann über eine Kommunikationsverbindung des Rechners 19 mit dem Internet an eine in dem Internet betriebene Plattform 22 übertragen werden. Die Übertragung der digitalen Bilddaten von dem Rechner 19 auf die Plattform 22 ist in Fig. 2 symbolisch durch den mit dem Bezugszeichen 23 gekennzeichneten Pfeil dargestellt. Die Plattform 22 wird vorliegend von einer mit dem Mobilfunknetz 14 verbindbaren Recheneinrichtung 21, vorliegend einer Servereinrichtung 21 eines den erfindungsgemäßen Datenübertragungsdienst ermöglichenden Diensteanbieters betrieben, dass heißt insbesondere gewartet, gepflegt und unterhalten. Entsprechend seitens der Recheneinrichtung 21 über die im Internet erreichbare Plattform 22 empfangene digitale Bilddaten werden dann entsprechend der über die Verbindung 23 der Plattform 22 und damit der Recheneinrichtung 21 mitgeteilten Rufnummer (MSISDN) des digitalen Bilderrahmens 1 von der Recheneinrichtung 21 an das Mobilfunknetz 14 übertragen. Die Übertragung der digitalen Bilddaten als auch der Rufnummer (MSISDN) des digitalen Bilderrahmens 1 ist in Fig. 2 symbolisch durch den mit dem Bezugszeichen 24 gekennzeichneten Pfeil dargestellt. Seitens des Mobilfunknetzes 14 werden die entsprechend empfangenden digitalen Bilddaten unter Nutzung der Rufnummer (MSISDN) des digitalen Bilderrahmens 1 an diesen beziehungsweise dessen im Mobilfunknetz 14 betreibbare Empfangseinheit weitergeleitet beziehungsweise weiter geroutet. Die Weiterleitung beziehungsweise das Routing ist in Fig. 2 symbolisch durch den mit dem Bezugszeichen 25 gekennzeichneten Pfeil dargestellt.

Die in der Fig. der Zeichnung dargestellten und im Zusammenhang mit diesen beschriebenen Ausführungsbeispiele der Erfindung dienen lediglich der Erläuterung der Erfindung und sind für diese nicht beschränkend.

### Bezugszeichenliste:

- 1: digitaler Bilderrahmen
- 2: Anzeigeeinheit
- 3: Gehäuse
- 4: Taster Steuereingabeeinheit
- 5: Taster Steuereingabeeinheit
- 6: Taster Steuereingabeeinheit
- 7: Schalter Steuereingabeeinheit
- 8: Schalter Steuereingabeeinheit
- 9: Taster Steuereingabeeinheit
- 10: Anschluss Stromversorgung
- 11: Einsatz SIM
- 12: Schalter Steuereingabeeinheit (Ein-/Ausschalter)
- 13: Stütze (Gehäuse (3))
- 14: Mobilfunknetz
- 15: Mobilfunktelefon
- 16: Datenübertragung
- 17: Datenübertragung
- 18: digitale Kamera
- 19: Rechner (PC)
- 20: Datenübertragung
- 21: Datenübertragung
- 22: Plattform/Internet-Portal/Internet-Seite
- 23: Recheneinrichtung/Server
- 24: Datenübertragung
- 25: Datenübertragung

## Patentansprüche

1. Verfahren zur Übertragung von digitalen Bilddaten und/oder digitalen Daten akustischer Signale in einem Mobilfunknetz (14), insbesondere gemäß einem GSM-, GPRS- und/oder UMTS-Funknetzstandard, über wenigstens einen Kommunikationsdienst des Mobilfunknetzes an eine in dem Mobilfunknetz (14) betreibbare Empfangseinheit eines digitalen Bilderrahmens (1), wobei der digitale Bilderrahmen (1) eine Anzeigeeinheit (2) zur Wiedergabe von digitalen Bilddaten und/oder digitalen Daten akustischer Signale, vorzugsweise umfassend Text-, Standbild-, Bewegtbild- und/oder Videodaten, wenigstens eine Speichereinheit zum Speichern von digitalen Bilddaten und/oder digitalen Daten akustischer Signale, einer Steuer- und Kontrolleinheit zur Steuerung der Wiedergabe von digitalen Bilddaten und/oder digitalen Daten akustischer Signale aus der wenigstens einen Speichereinheit seitens der Anzeigeeinheit (2), eine Steuereingabeeinheit (4, 5, 6, 7, 8, 9, 10, 12) zur Erfassung von Eingaben zur Steuerung von Funktionen der Steuer- und Kontrolleinheit, und eine in dem Mobilfunknetz (14), insbesondere gemäß einem GSM-, GPRS- und/oder UMTS-Funknetzstandard, betreibbare Empfangseinheit zum Empfangen von digitalen Bilddaten über wenigstens einen Kommunikationsdienst des Mobilfunknetzes (14) aufweist, **dadurch gekennzeichnet, dass** der Zeitpunkt über wenigstens einen Kommunikationsdienst des Mobilfunknetzes erfolgenden Übertragung von digitalen Bilddaten und/oder digitalen Daten akustischer Signale hinsichtlich Datum und/oder Uhrzeit einstellbar ist.

2. Verfahren nach Anspruch 1, **dadurch gekennzeichnet, dass** der Zeitpunkt der Übertragung hinsichtlich Datum und/oder Uhrzeit von dem Sender der digitalen Bilddaten und/oder digitalen Daten akustischer Signale ausgewählt und/oder vorgegeben wird.

3. Verfahren nach Anspruch 1 oder Anspruch 2, **dadurch gekennzeichnet, dass** zu übertragende digitale Bilddaten und/oder digitale Daten akustischer Signale zumindest bis zum Zeitpunkt der Übertragung seitens einer Einrichtung des Mobilfunknetzes (14), vorzugsweise einer Datenbankeinrichtung (21) des Mobilfunknetzes (14), zwischengespeichert und von dieser dann an die Empfangseinheit übertragen werden.

4. Verfahren nach einem der Ansprüche 1 bis 3, **dadurch gekennzeichnet, dass** die Empfangseinheit des digitalen Bilderrahmens (1) ein MobilfunkteilnehmerIdentifikationsmodul (SIM; 11) nutzt.

5. Verfahren nach einem der Ansprüche 1 bis 4, **gekennzeichnet durch** eine Speicherung von mittels der Empfangseinheit des digitalen Bilderrahmens (1) empfangener digitaler Bilddaten und/oder digitaler Daten akustischer Signale seitens der Speichereinheit des digitalen Bilderrahmens (1).

6. Verfahren nach Anspruch 5, **gekennzeichnet durch** eine von der Steuer- und Kontrolleinheit des digitalen Bilderrahmens (1) gesteuerte Speicherung, vorzugsweise **durch** eine automatische Speicherung bei Empfang von digitalen Bilddaten.

7. Verfahren nach einem der Ansprüche 1 bis 6, **dadurch gekennzeichnet, dass** die Steuer- und Kontrolleinheit des digitalen Bilderrahmens (1) digitale Bilddaten in ein an die Wiedergabemöglichkeiten der Anzeigeeinheit (2) angepasstes Format verbringt.

8. Verfahren nach Anspruch 7, **dadurch gekennzeichnet, dass** die Verbringung der digitalen Bilddaten in das an die Wiedergabemöglichkeiten der Anzeigeeinheit (2) des digitalen Bilderrahmens (1) angepasste Format im Rahmen der Steuerung der Wiedergabe von digitalen Bilddaten aus der wenigstens einen Speichereinheit des digitalen Bilderrahmens (1) oder im Rahmen der Speicherung der digitalen Bilddaten seitens der Speichereinheit des digitalen Bilderrahmens (1) erfolgt, vorzugsweise automatisch.
